Europäisches Patentamt

(19) European Patent Office

Office européen des brevets

(11) Publication number: **0 229 935 B1**

# (12) EUROPEAN PATENT SPECIFICATION

(45) Date of publication of patent specification: **03.07.91**   (51) Int. Cl.5: **A41H 3/00**

(21) Application number: **86116529.8**

(22) Date of filing: **28.11.86**

(54) Automatic drawing and ruling machine.

(30) Priority: **20.12.85 ES 550267**

(43) Date of publication of application:
**29.07.87 Bulletin 87/31**

(45) Publication of the grant of the patent:
**03.07.91 Bulletin 91/27**

(84) Designated Contracting States:
**AT BE CH DE FR GB IT LI LU NL SE**

(56) References cited:
**EP-A- 0 036 843**
**GB-A- 1 397 159**
**US-A- 3 844 461**

(73) Proprietor: **INVESTRONICA S.A.**
**Tomás Breton, 62**
**E-28045 Madrid-7(ES)**

(72) Inventor: **Alcantara Perez, Bernardo**
**C/ Rioja no. 13 4 B**
**Madrid(ES)**
Inventor: **Becerra Carrasco, Rodrigo**
**Urbanizacion 109 Villas F-17**
**Pozuelo Estacion (Madrid)(ES)**
Inventor: **Diaz-Zorita Gonzalez, Fernando**
**C/ Virgen de Nuria no. 13 1apta.5a.**
**ES-28027 Madrid(ES)**

(74) Representative: **Puschmann, Heinz H. et al**
**Rieder & Partner Patentanwälte Postfach 10 12 31**
**W-8000 München 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to an automatic drawing and ruling machine comprising a flatbed drawing zone, a paper supply zone and a paper collecting zone, an X-Y-assembly supporting drawing and/or ruling tools and movable over the surface of a table located at the drawing zone, which X-Y-assembly consisting of an X-Y-carriage and an Y-carriage, a motor driven supply reel and a motor driven collecting reel for feeding and collecting the paper, and a controller as well as servo and power units, whereby clamps are suspended from opposite sides of the X-carriage for engaging the paper and moving said paper over the drawing zone from one reel to the other.

Such machines are designed for example as plotters. Therefore, there is a need for a drawing apparatus which is reliably working. In the tailoring industry, patterns must also be prepared to be used as production control elements. These patterns are made of stronger materials than paper, such as cardboard or plastic. The preparation of such patterns will also be dealt with here.

One problem with flatbed plotters is the strip feed in cases, where long strips of sheet material can be handled with a table that is relatively short compared to the length of the strip.

According to US-A-3 844 461 the paper on which the plot has to be made is unwound from a roll and is intermittently advanced in pieces of length sufficient to cover the machine working plane; at the same time the plotted pieces of paper are rewound.

In order to get continuous patterns extending between adjacent segments of the strip, it is necessary to control the strip feed very precisely and to hold the strip axis parallel in place during plotting and/or ruling. It is known to use perforated strips, gear racks or high precision conveyor to ensure the continuous extension of the series of lines of a pattern extending over adjacent segments.

A further difficulty is that the movement of the strip must be fast, because computer controlled plotting and ruling heads work very fast. A relatively great starting and stopping torque is necessary to drive and stop the feed spools. Such plotting and ruling heads are wellknown, see EP-A-0 036 843.

It is in object of the present invention to further develop an automatic drawing and ruling machine of the above mentioned kind in such a way that it can work without perforated strips and which has relatively low space requirements.

This object is achieved by the features indicated in claim 1, the invention being characterized in that adjacent to the table defining the drawing zone paper loops between the reels and the table are established by spinners acting on the paper under control of stroke limiters, in that the paper is fed by the X-carriage to the full extent of the drawing zone during each feeding action, and in that bars on both side of the drawing zone actuated by electromagnets are established for preventing unwanted movements of the paper during each plotting and/or ruling process.

A further advantageous development of the automatic drawing and ruling machine resides in that an intermittent On/Off-signal from the controller is initiated by the spinner at the supply zone when leaving the stroke limiter in order to release the supply reel so that by the weight of the spinner the supply reel begins to turn in an anticlockwise direction feeding strip to the loop formed by the spinner, whereby because of the high inertia of the strip roll this movement is slower than necessary for the movement of the strip by the X-carriage, and whereby the spinner rises, but the intermittent signal to the brake of the supply reel prevents the supply reel to supply strip to such an extent that the spinner makes contact with the stroke limiter which would switch off the machine.

According to a further advantageous embodiment of the present invention an Off-signal from the controller is initiated by the spinner when coming in contact with a stroke limiter for stopping the feeding by stopping the intermittent On/Off-signal to the supply reel, wherein the spinner at the collection zone is lowered by the fed strip until reaching a stroke limiter, thus initiating a signal from the controller for starting a motor-reduction group for winding up the drawn strip on the collection reel until the spinner reaches a further stroke limiter during its upward movement.

The flatbed plotter has three basic areas: drawing zone, strip supply zone and strip collection zone.

Drawing and/or ruling takes place in the first of these zones which consists of a table on which the operation is carried out, a bridge which moves along the table and a trolley which moves along the bridge and therefore at right angles to the table. This trolley carries the drawing and ruling tools. The controller is mounted in the bottom part of the table with the command panel opposite.

The strip supply and collection assemblies are fitted on each side of the table, and they operate independently of each other and of the drawing zone. Their components are controlled by said stroke limiters. On the feed side a stock of strip must be maintained which enables it to be supplied to the drawing zone when drawing and/or ruling has been completed on the part which was in that zone. The collection side rolls up the drawn strip as it passes into this zone from the drawing section.

The strip is passed over the drawing zone by the bridge itself by means of a set of grips which is attached to it.

During the design process the plotter controller only orders the drawing and/or ruling of the parts and part sections which are located in the drawing section; in other words, the drawing is carried out in a section, each movement of the strip has the length of said section consecutively in the direction of the longer axis made to coincide with the X-axis here. This means that the length of the strip can be as long as desired.

For ruling the patterns are cut with a tapered tip stylus which engraves plastic strips. In fact, it does not carry out a complete cutting operation; rather, once the plastic strip has been ruled, the panel is separated by hand. This is very easy to do, thanks to the considerable gash created by the stylus. As the part is not completely separated from the plastic strip, it is enough to secure the strip as a whole, using the strip securing components, or simply with adhesive tape along the edges of the strip.

BRIEF DESCRIPTION OF THE DRAWINGS

As complement to the description which follows, and so as to achieve a better understanding of the characteristics of the invention, there is attached to these Specifications, and forming an integral part hereof, a set of drawings which, by way of illustration, and without limitation, show the following:

Figure 1 is a perspective view of the machine.

Figure 2 is a diagrammatic representation of the position of the paper.

Figure 3 is a diagrammatic ground plan of the machine.

Figure 4 is a perspective view of the operation of the X and Y axes.

Figure 5 is a detail of the paper securing parts.

Figure 6 is a profile view of the table showing the bars which fix the paper on to the table.

Figure 7 is a view of the drawing and ruling tool for plastic patterns.

Figure 8 is a high capacity drawing tool.

Figure 9 is a detail of the parts which secure the drawing tool plunger.

Figure 10 is the plastic ruling tool.

Figure 11 is a block diagram of the controller.

Figure 12 is a detailed block diagram of the controller.

DESCRIPTION OF THE MACHINE

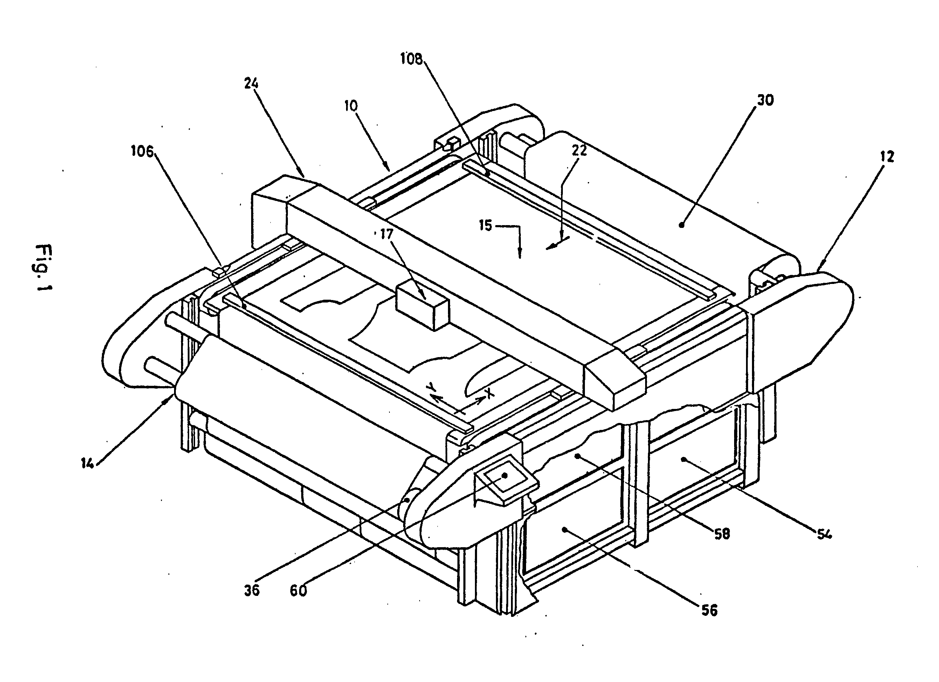

Figure 1 is a diagrammatic view of the whole machine which is the object of this patent, where it is possible to identify the drawing zone, 10,, the feed assembly, 12, and collection assembly, 14.-

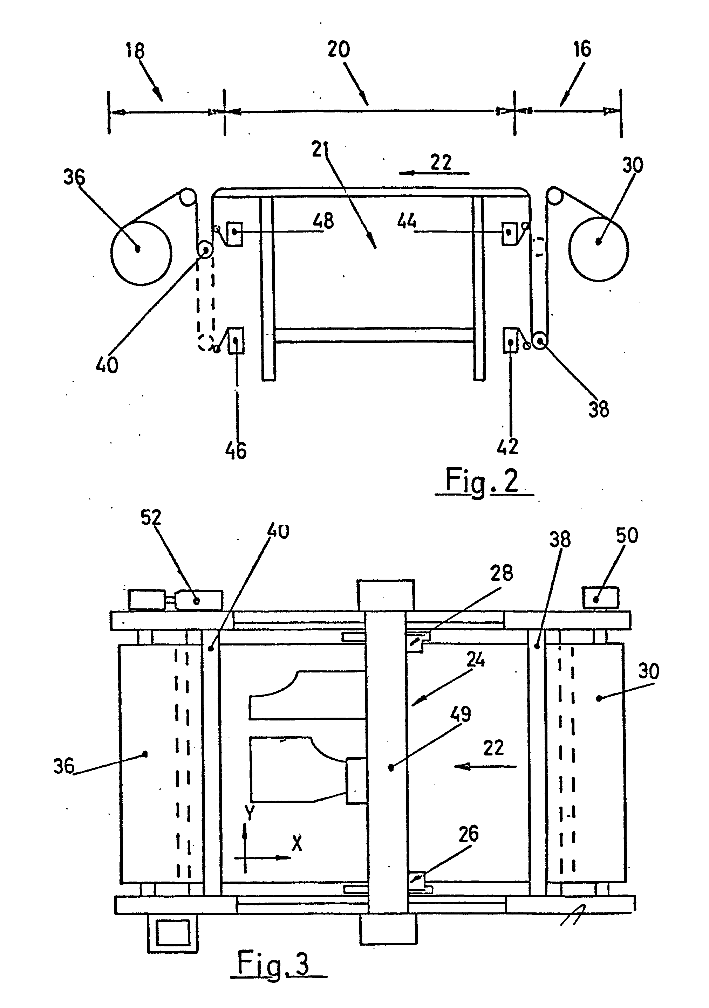

Basically, the drawing zone is a table on which the paper, 15, is spread for the drawing operation. The drawing tool, 17, moves over the whole surface of the table, supported by the X-Y assembly, 24; also on this assembly and, more specifically, on the trolley, 49, fig. 3, the clamps, 26 and 28 are fitted which act to advance the paper: they are free to move in T-shaped grooves on the trolley, 49, so that the distance between them can easily be altered and so the width of the drawing paper.

Figure 2 shows a diagrammatic profile view of the machine, with the supply zone, 16, of the supply assembly, 12, the collection zone, 18, of the collection assembly, 14, and the drawing zone, 20, with the table, 21. Here, we can see the supply paper reel, 30, and the collection reel, 36, the supply and collection zone spinners, 38 and 40, and the stroke limiters, 42, and 44, of the feed zone, and 46 a and 48 of the collection zone. In the feed zone is the brake, 50 fig. 3, which prevents the reel, 30, from racing under the influence of the spinner, 38, and so thereby releasing paper in an uncontrolled fashion; in the collection zone is the motor reduction group, 52, which is designed to collect the paper, as necessary according to the spinner position (40). Figures 1, 2 and 3 show the direction of forward movement of the paper with the arrow marked no. 22. Under the table, 21, in the drawing zone, 20, the machine's control unit is installed; it is divided into two modules, 54, of supply sources, control, 56, and servo and power units, 58. Controller communication with the outside is along a standard data I/O line and through a command panel, 60.

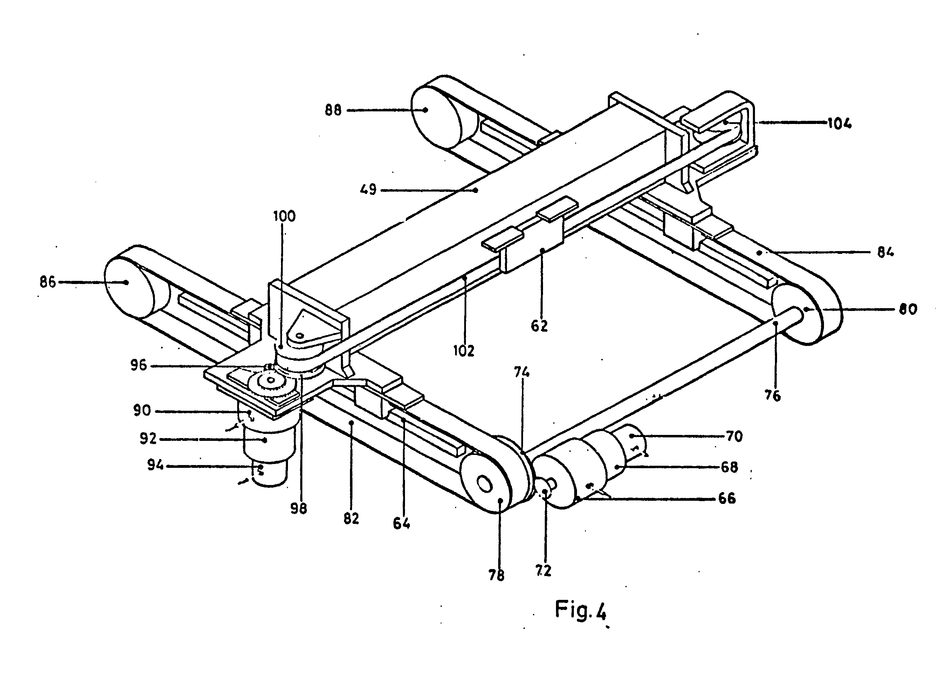

As already mentioned, the drawing tool, 17, mounted on the X-Y assembly, 24, moves over the surface of the table, 21. As seen in detail in figure 4, this assembly is made up of a carriage X 49 and another marked 62; the former is located at right angles to the guides, 64, which are fitted on both sides of the table and parallel to the X axis, so that the carriage, 49, moves in direction Y of a system of orthogonal coordinate axes. As both axes move according to the same principle, only the X axis is described here. The motor, 66, is located at one end of the drawing zone, and is an assembly comprising the motor, 66, tachometer, 68, and position transducer, 70, all of which forms part of a position servo. With a reduction, 72-74, the motor drives the shaft 76, which crosses the drawing table from one side to the other; on each end of this shaft are the geared pulleys, 78 and 80, around which run the belts, 82 and 84, which are held tensed by the tensing pulleys 86 and 88. The carriage, 49, is driven by the belts, 82 and 84, to which it is fixed. The motor Y, 90, is fitted on the carriage, 49, with the tachometer, 42, transducer, 94, gears 96 and 98, drive pulley, 100, belt, 102 and tensor pulley, 104 for moving the carriage, 62. In this way, under the action of the command signal, it reaches the motor, 66, from the controller's servo and power module, 58; the drawing tool, 17, can move together with the carriage, 49, forwards and backwards, as well as in parallel along direction X. In the same way, motor 90 drives the drawing tool, 17, along the carriage, 49, forwards and backwards (i.e. at right angles to the previous movement). Between them, any figure on the X-Y plane can be drawn.

Given that, as a rule, the panels to be drawn, or the groups of panels are larger than the drawing tool area, the machine is able to advance the paper along a given pre-set length, to be called "window width" so that the real useful drawing length is limited only by the size of the reel of paper fitted on the supply side. For these purposes, when the controller has sent all the information which can be drawn in the window on the drawing zone, and this has been done by the machine, a signal is sent to the X motor, 66, to go to the table position corresponding to the longest X coordinate. Once it is there, a further signal is delivered to clamps 26 and 28 to grip the paper and, once more, the X motor, 66, and to move in the same conditions as above, over a distance which is equal to the width of the window and in the direction indicated by arrow 22 in figure 2, so that new paper is placed in the drawing zone and the drawing operations can be continued. Once this movement is completed, the grips release the paper and the drawing process is resumed. During this process, figure 2, the feed side spinner, number 38, rises so as to supply the paper in its loop, while spinner 40, drops from its rest position; this immediately sets up a sequence of movements which tend to recover the rest position of the feed and collection modules described by way of continuation. As soon as the spinner, 38, leaves the stroke limiter, 42, the brake, 30, receives from the controller an intermittent on-off signal so that, under the weight of the spinner, 38, the roll of paper, 30, begins to rotate anticlockwise, fed by paper to the loop formed by the spinner, 38; because of the high inertia of the reel, this movement is slower than that forced by the drawing of paper by the bridge and the spinner, 38, rises, but not so much as to arrive at the stroke limiter, 44, which would shut the machine off. On the other hand, the intermittent signal to the brake prevents the feed paper reel, 30, from reaching high speeds, so that the size of the brake to be used is significantly reduced. Emphasis must be placed here on the effect of the isolation of the supply reel, 30, of a high level of inertia, with respect to the movement of the paper by the carriage, 49, the result of which is that all that has to be moved is the small inertia of the spinner, 38.

The feed side process described stops when the spinner, 38 once more touches the stroke limiter, 42, which cancels the intermittent signal to the brake, which is thus cut off as, in these conditions, is the brake for the movement of the reel, 30. On the collection side, 18, the spinner, 40, on receiving paper, drops till reaching stroke limiter, 46, which starts the reducer motor, 52, and the paper which has been drawn moves to the collection reel, 36; motor 52 stops once the spinner, 40, arrives at the stroke limiter, 48, in its upward stroke.

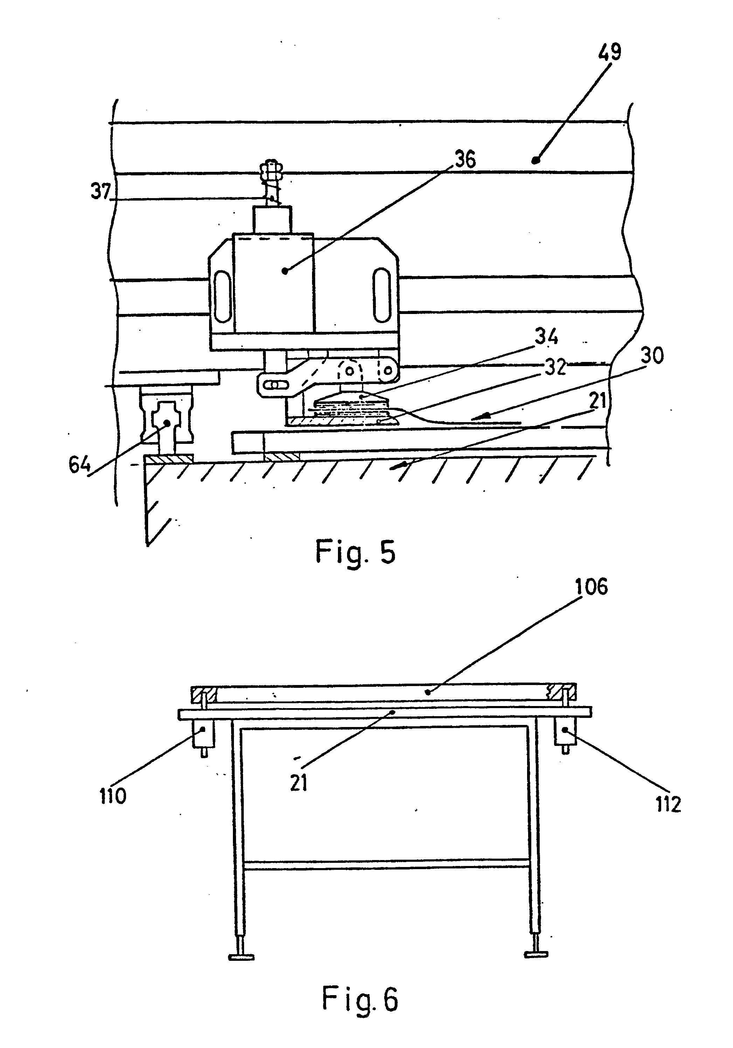

Figure 5 shows, in greater detail, one of the grips, 26 or 28, which consists of a jaw of fixed type, 32, and a mobile one, 34, joined to an electromagnetically operated lever, 36; the electromagnet is operated automatically by the controller, as previously explained, or else manually from command panel, 60. Throughout the working process, the the paper, 30, runs between both jaws with relative movement between paper and grips as long as electromagnet, 36, is off, since the spring, 37, keeps them open.

In order to prevent any unwanted movement of the paper during the drawing process, on both sides of the drawing zone, 20, are the bars which secure the paper to the table, 106 and 108 (fig. 1). One of the bars, 106, is shown in figure 6, with the operating electromagnets 110 and 112 which raise it when the paper must be moved, i.e. whenever grips 26 and 28 are open, bars 106 and 108 are holding the paper, and vice versa, when grips 26 and 28 secure the paper, the bars release it so that it can be moved.

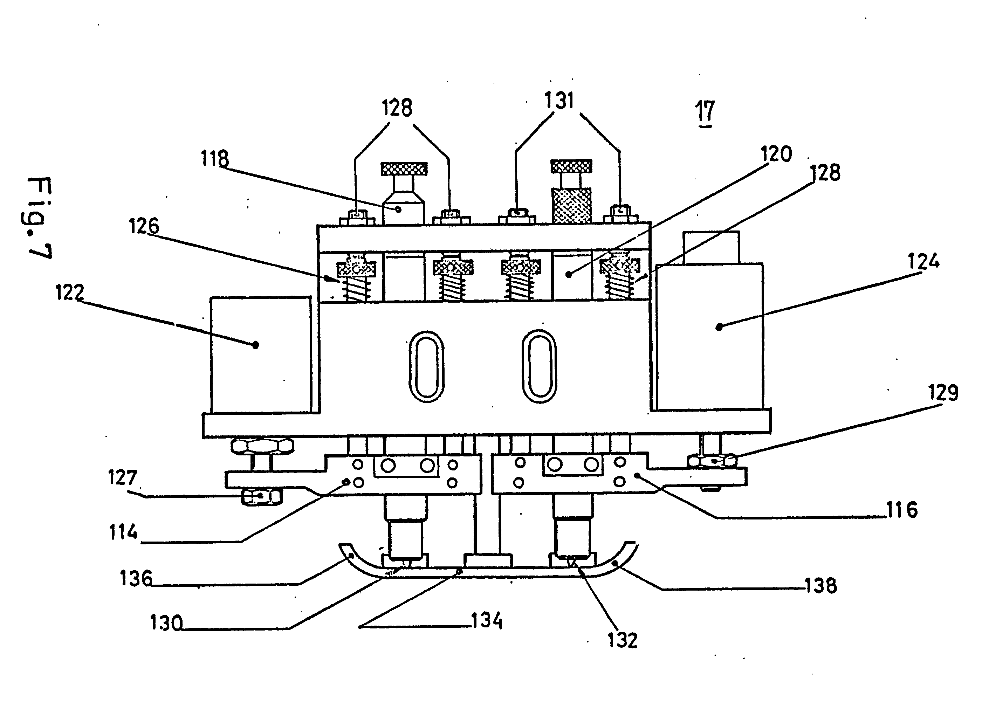

The drawing tool, 17, is shown in figure 7 with more detail. Essentially, it is made up of two carriages, 114 and 116 which move vertically; one of them holds the drawing tool as such, 118, which, for this type of machine, usually has a high capacity, while the other, the plastic ruling tool, 120, for the preparation of the patterns is fitted. Each of these carriages is operated by an electromagnet, 122 and 124, with spring recovery, 126 and 128. The stroke is adjusted with bolts 127 and 129, and 128 and 131. Since the paper is always in grips 26 and 28, at the edges it is not entirely flat on the surface of the table, in the carriage indications, 49, as can be seen from figure 5; therefore, so as to prevent the point, 130 of the ball-point pen 118, or that of the plastic ruling tool, 132, from rumpling the paper on return from the outside, the bottom part of the tool has a skid, 134, with forms 136 and 138.

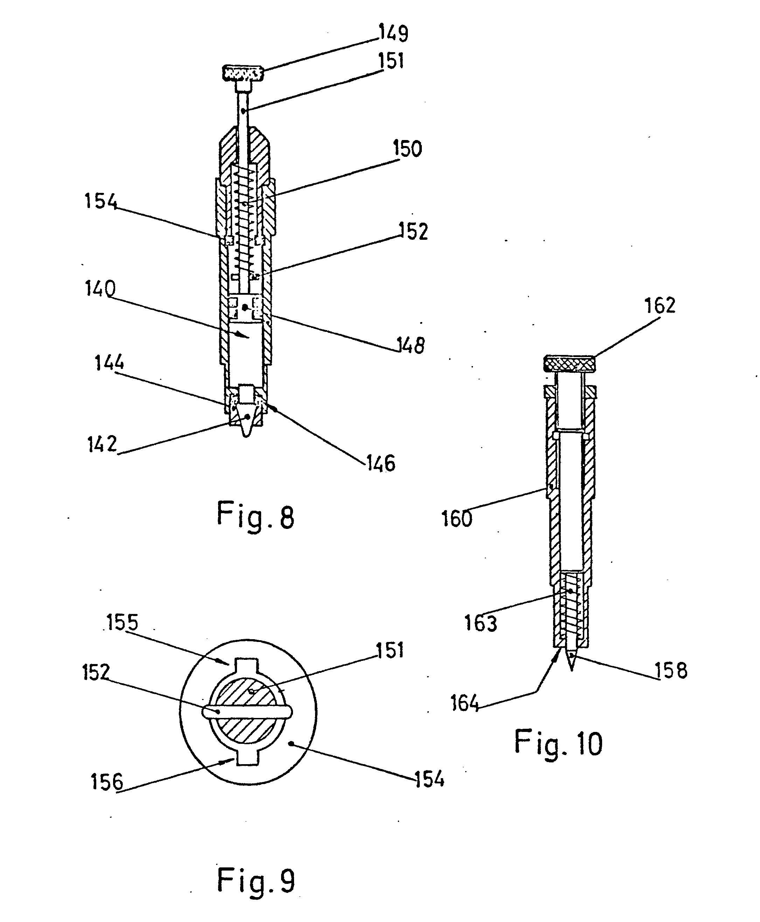

The high capacity drawing tool, 118, designed for this machine is represented in figure 8. Because of the high drawing speed which is possible with this machine, the ink must be pressurised. Thus, in essence, tool 118 comprises a cylinder, 140, which contains the ink; the drawing tip, 142, secured to it by nut 144 and O-ring 146; plunger 148, at the other end of which is the handle, 149, under pressure from spring 150. Shaft 151 of the plunger has a pin, 152, on which the spring presses and which, in addition, holds the plunger in its top position for the ink filling operation or when it is not necessary to draw for a long period of time. To fill with ink, at the top of the tool is part 154 which is a circular washer (fig. 9) with a central hole, and two housings, 155 and 156 to allow the shaft, 151 and pin, 152, to be passed through; once the pin is at the top of the piece, the plunger is turned on its axis so that the pin prevents it from dropping.

Figure 10 shows in detail the plastic ruling tool which, basically, consists of a tungsten carbide tip, 158, which is conically shaped, and a mount, 160, inside which the tip is fitted; the conical part which emerges from the tool can be adjusted with nut 162 and spring 163; the former makes it possible, for ruling plastic materials of different thickness to penetrate the plastic with the tip until the bottom of the tool (surface 164) is supported by the upper face of the plastic, which means that the tool is moved at right angles to the X-Y plane, following any possible irregularities in the plane and cutting to a constant depth, so making it possible, later, to separate the ruled forms from the remainder of the material. The machine's program means that, on these forms (patterns) characters are drawn which identify them, using tool 118.

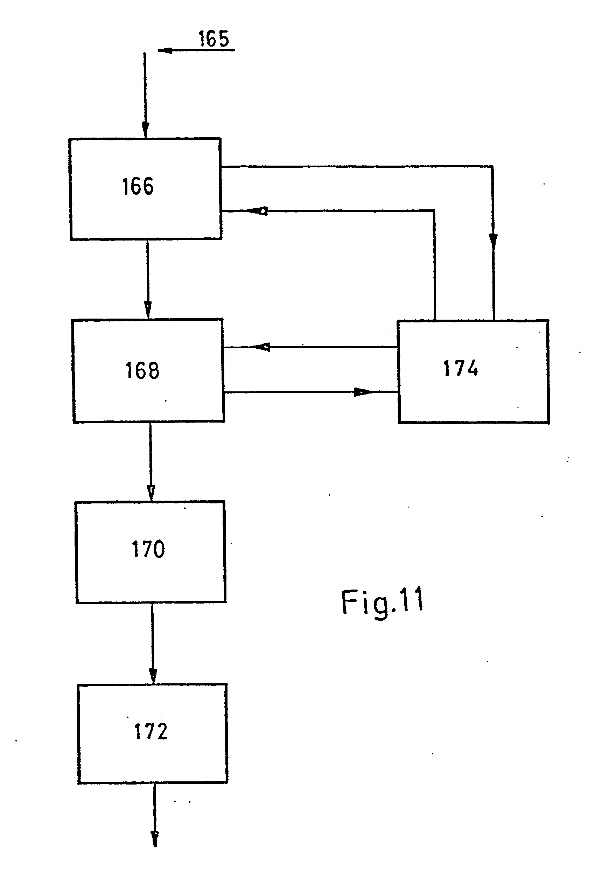

The machine controller is shown in figure 1, with elements 54, 56 and 58; it is designed to govern axes X and Y and the ancillary elements (tampers, 106, 108, grips 26 and 28, drawing tool, 118, ruling tool, 120, etc) of the machine. To do this, it receives the information from the external processing system and processes and delivers the necessary orders to the mechanical components in order to obtain the drawing or pattern required. Fig. 11 shows the controller block diagram in which it is possible to see the equivalents of the CPU 166, slave, 168, X-Y computer, 170, control stages, 172, and the logic for the ancillary elements, 174.

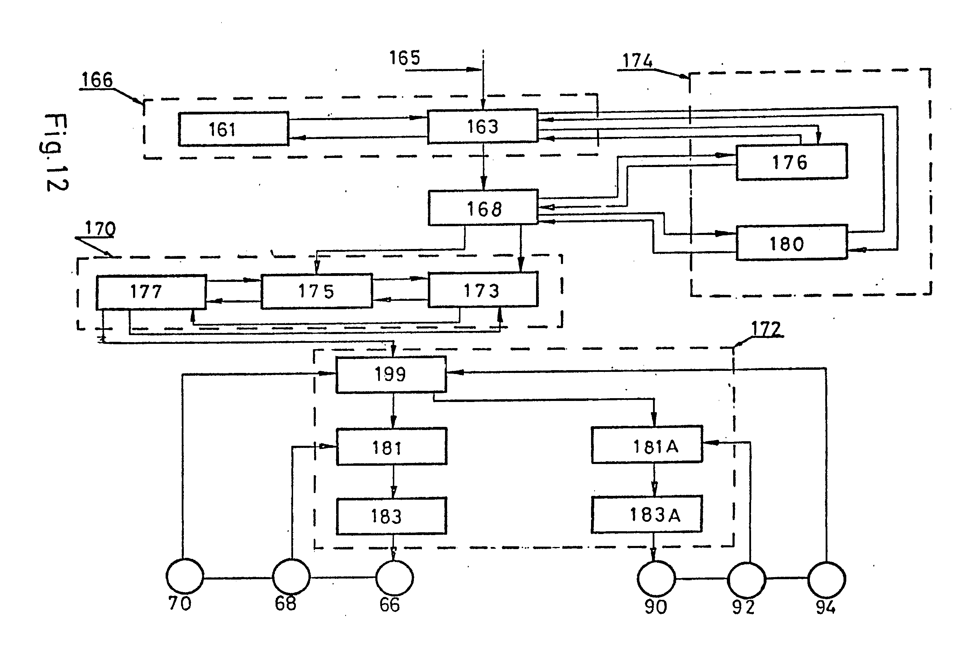

In greater detail (fig. 12), the CPU is made up of the CPU and the peripheral card 163. The data arrive from the exterior at computer 166, along an asynchronous standardised serial line; this information, digitalised on the drawing to be made, is interpolated in the CPU, 161, and once the dynamic calculation has been made of the movement, the slave, 168, is advised by means of peripheral card 163, of the X and Y increments which are required and at what moments they are to occur. Computer 166 receives and executes the orders delivered by the command panel, 60. The CPU, 161, consists of an 8 bit micro-computer which contains the machine control program, housed in EPROM and 32 K of RAM memory. The peripheral card, 163, is directly entrusted with receiving the information from the exterior, and sends information to the slave computer, 168, and receives information from the command panel, 60, by means of I/O cards, 176.

The slave computer, 168, is made up of an 8 bit micro-computer with 8 K EPROM and 4K RAM memory, as well as the integrated circuits for communication with the command panel and electromechanic systems, and with the X = Y computer, 170. This last element receives the information in impulse form which must be moved by each axis, grouped in the corresponding quartets for increases in X and Y and the number of impulses accelerating and at constant speed - these latter two correspond to the dominant axis (that of greatest increase) - and delivers to the control loops of each axis the impulses with the appropriate sequencing for operating the motors of each of the shafts. In order to do this, the X-Y computer, 170, comprises the following blocks; acceleration ramps generator, 173, logic arithmetic unit, 175 and sequencer, 177. The generator, 173, is designed to generate the impulses to be sent to the position loop of each shaft and, in addition, to generate them at the correct moment, which is done by varying the frequency of impulses from a clock, according to the data incorporated in an EPROM memory which has recorded the time between successive impulses and according to the number of impulses given since the rest point. The process as a whole is carried out with the ALU, 175, which is intended to generate the information for the dominant axis and the sequencer, 177, which controls the procedure.

The control stages, 174, are responsible for supplying voltage and current to the motors for each of the X = Y shafts (assemblies 66-68-70 and 90-92-94, figure 4) on the basis of the impulses delivered by the X-Y computer. The position transducers, 70 and 94, are encoders, which feed back the signal position run in impulse form to the encoders card 199, which subtracts them from those received from the X = Y computer and provides the control stages 181 and 181A of each shaft with a voltage which is proportional to the difference between the two signals; the previous voltage signal, together with the speed signals provided by tachometers 68 and 92, are fed to control stages 181 and 181A which contain the servo stabilisation networks and, finally, the power stages 183 and 183A amplify the signal from the previous stages and supply the current required for motors X = Y, 66 and 90.

Finally, the logic for the ancillary elements, 174, the block designed to supply the power of the electromagnets for grips 26 and 28, and tampers 106 and 108, drawing tool, 118 and the pastic ruler tool 120, etc, and to receive the signals from the different stroke limiters of the machine and command panel, preparing them and delivering them to the different micro-computers. The information I/O function is carried out in card, 176, while card 180 is responsible for the operation of electromagnets, brake, etc.

## Claims

1. Automatic drawing and ruling machine comprising a flatbed drawing zone (20), a paper supply zone (16) and a paper collecting zone (18), an X-Y-assembly (24) supporting drawing and/or ruling tools (17, 130, 132) and movable over the surface of a table (21) located at the drawing zone (20) which X-Y-assembly consists of a X-carriage (49) and a Y-carriage (62), a motor driven supply reel (30) and a motor driven collecting reel (36) for feeding and collecting the paper (15), and a controller (56) and servo and power units (58), whereby clamps (26, 28) are suspended from opposite sides of the X-carriage (49) for engaging the paper and moving said paper over the drawing zone (20) from one reel to the other, **characterized** in that adjacent to the table (21) defining the drawing zone (20) paper loops between the reels (30, 36) and the table (21) are established by spinners (38, 40) acting on the paper (15) under control of stroke limiters (42, 44 and 46, 48), that the paper (15) is fed by the X-carriage (49) the full extent of the drawing zone (20) during each feeding action, and that bars (106, 108) on both sides of the drawing zone (20) actuated by electromagnets (110, 112) are established for preventing unwanted movements of the paper during each plotting and/or ruling process.

2. Machine according to claim 1, **characterized** in that an intermittent On/Off-signal from the controller (56) is initiated by the spinner (38) at the supply zone (16) when leaving the stroke limiter (42) in order to release the supply reel (30) so that by the weight of the spinner (38) the supply reel (30) begins to turn in an anticlockwise direction feeding strip to the loop formed by spinner (38), because of the high inertia of the strip roll this movement is slower than necessary for the movement of the strip by the X-carriage (49), whereby the spinner (38) rises, but the intermittent signal to the brake of the supply reel (30) prevents the supply reel (30) to supply strip in such extent that the spinner (38) makes contact with the stroke limiter (44) which would switch off the machine.

3. Machine according to claim 1, **characterized** in that an Off-signal from the controller (56) is initiated by the spinner (38) when coming in contact with stroke limiter (42) for stopping the feeding by stopping the intermittent On/Off-signal to the supply reel (30) and that the spinner (40) at the collection zone (18) is lowered by the fed srip until reaching a stroke limiter (46), thus initiating a signal from the controller (56) for starting the motor-reduction group (52) for winding up the drawn strip on the collection reel (36) until the spinner (40) reaches a further stroke limiter (48) during its upward movement.

4. Machine according to claim 1 , **characterized** in that the clamps (26, 28), have a fixed jaw (32) and a mobile jaw (34) which is attached to an electromagnetically operated lever (36), the electromagnet (37) is automatically operated by the controller (56), or else manually from the command panel (60), whereby the strip (15) passes between the two jaws by relative movement between strip and grips as long as the electromagnet is held in its open condition by a spring (37).

5. Machine according to claims 1 and 4, **characterized** in that for preventing any unwanted movement of the strip (15) during a drawing process bars (106, 108) for securing the strip (15) are mounted to the table (21) and operated by electromagnets (110, 112) for raising said bars when the strip (15) must be moved as long as the clamps (26, 28) are in open position.

## Revendications

1. Machine automatique à dessiner et à tracer comprenant une zone de dessin (20) à plateau, une zone d'amenée de papier (16) et une zone de collecte de papier (18), un ensemble X-Y (24) supportant les outils de dessin et/ou de traçage (17, 130, 132) et mobile sur toute la surface d'une table (21) située dans la zone de dessin (20), ledit ensemble X-Y consistant en un chariot en X (49) et un chariot en Y (62), une bobine d'amenée (30) entraînée par moteur et une bobine de collecte (36) entraînée par moteur, pour amener et pour collecter le papier (15), et un dispositif de commande (56) et des ensembles asservis et motorisés (58), grâce à quoi des pinces (26, 28) sont suspendues aux côtés opposés du chariot en X (49) pour venir en contact avec le papier et déplacer, d'une bobine vers l'autre, ledit papier au-dessus de la zone de dessin (20), caractérisé en ce que, à côté de la table (21) définissant la zone de dessin, des boucles de papier sont établies, entre les bobines (30, 36) et la table (21), par des rouleaux (38, 40) agissant sur le papier (15) sous commande de limiteurs de course (42, 44 et 46, 48), que le papier (15) est amené par le chariot en X (49) de toute la longueur de la zone de dessin (20) lors de chaque opération d'amenée et que des barres (106, 108) sur les deux côtés de la zone de dessin (20) actionnées par électroaimants (110, 112), sont établies pour empêcher des déplacements indésirables du papier pendant chaque processus de report graphique et/ou de traçage.

2. Machine selon la revendication 1, caractérisée en ce qu'un signal intermittent marche/arrêt provenant du dispositif de commande (56) est initié par le rouleau (38) dans la zone d'amenée (16) lorsqu'il quitte le limiteur de course (42) pour libérer la bobine d'amenée (30) de sorte que, grâce au poids de la bobine (38), la bobine d'amenée (30) commence à tourner dans un sens anti-horaire en amenant une bande à la boucle formée par le rouleau (38), que ce déplacement, en raison de l'inertie élevée des galets de bande, est plus lent que nécessaire pour le déplacement de la bande par le chariot en X (49), grâce à quoi le rouleau (38) monte, mais le signal intermittent envoyé au frein de la bobine d'amenée (30) empêche la bobine d'amenée (30) d'amener suffisamment la bande pour que le rouleau (38) vienne en contact avec le limiteur de course (44) ce qui arrêterait la machine.

3. Machine selon la revendication 1, caractérisée en ce que le signal d'Arrêt provenant du dispositif de commande (56) est initié par le rouleau (38) lorsqu'il vient en contact avec le limiteur de course (42) pour arrêter l'amenée en arrêtant le signal intermittent Marche/Arrêt envoyé à la bobine d'amenée (30) et en ce que le rouleau (40), dans la zone de collecte (18), est abaissé par la bande d'amenée jusqu'à ce qu'il parvienne à un limiteur de course (46), ce qui initie un signal provenant du dispositif de commande (56) pour mettre en route le groupe motoréducteur (52) pour enrouler, sur la bobine de collecte (36), la bande tirée jusqu'à ce que le rouleau (40) parvienne à un autre limiteur de course (48) pendant son mouvement ascendant.

4. Machine selon la revendication 1, caractérisée en ce que les pinces (26, 28) comportent une mâchoire fixe (32) et une mâchoire mobile (34) qui est attachée à un levier (36) actionné de façon électromagnétique, que l'électroaimant est automatiquement mis en oeuvre par le dispositif de commande (56) ou l'est manuellement à partir du panneau de commande (60), grâce à quoi la bande (15) passe entre les deux mâchoires grâce à un déplacement relatif entre la bande et les griffes tant que l'électroaimant est maintenu dans sa condition ouverte par un ressort (37).

5. Machine selon les revendications 1 et 4, caractérisée en ce que, pour empêcher un déplacement indésirable de la bande (15) pendant un processus de dessin, des barres (106, 108) de fixation de la bande (15) sont montées sur la table (21) et mises en oeuvre par des électroaimants (110, 112) pour soulever lesdites barres lorsque la bande (15) doit être déplacée pendant que les pinces (26, 28) sont en position ouverte.

## Ansprüche

1. Maschine für das selbsttätige Zeichnen und Ausschneiden, mit einem Flachbett-Zeichenbereich (20), einem Papierzuführungs-(16) und einem Papieraufwickelbereich (18), einer das Zeichen- und/oder Schneidgerät (17, 130, 132) tragenden und über einen im Zeichenbereich angeordneten Zeichentisch (21) bewegbaren X-Y-Anordnung (24), bestehend aus einem X-Schlitten (49) für das Bewegen in der x-Achse und aus einem Y-Schlitten (62) für das Bewegen in der Y-Achse, mit einer motorgetriebenen Vorratsrolle (30) und einer motorgetriebenen Aufwickelrolle (36) für das Papier (15) und mit einem Controller (56), einer Servo- und Netzeinheit (58), wobei an einander gegenüberliegen Seiten des X-Schlittens (49) Klemmvorrichtungen (26,28) vorgesehen sind, die mit dem Papier in Eingriff bringbar sind, um dieses über den Zeichenbereich von der Vorratsrolle zur gegenüberliegenden Aufwickelrolle zu befördern, dadurch **gekennzeichnet,** daß dem Zeichentisch (21) benachbart Papierüberschüsse darstellende Durchhänge jeweils zwischen Rolle (30, 36) und dem Zeichentisch (21) mittels Spannrollen (38, 40) gebildet sind, die über steuernde Hubbegrenzer (42, 44 und 46, 48) am Papier (15) angreifen, daß das Papier (15) mit Hilfe des X-Schlittens (49) über den gesamten Zeichenbereich in einem Zuführvorgang gefördert wird und daß über Magnetschalter betätigbare Schienen (106, 108) zu beiden Seiten des Zeichenbereiches (20) angeordnet sind, über die ein unkontrolliertes Verschieben des Papiers während eines Zeichen- und/oder Schneidvorganges verhinderbar ist.

2. Maschine nach Anspruch 1, dadurch **gekennzeichnet**, daß ein intermittierendes Ein-Aus-Signal vom Controller (56) über die Spannrolle (38) im Zuführbereich (16) beim Abheben vom Hubbegrenzer (42) zwecks Freigabe der Vorratsrolle (30) ausgelösbar ist, so daß infolge des Eigengewichts der Spannrolle (38) die Vorratsrolle (30) im Gegensinn zu drehen beginnt und Papier an den durch die Spannrolle (38) gebildeten Durchhang liefert, wobei wegen des hohen Eigengewichts der Vorratsrolle diese Bewegung langsamer als für den Transport des Papiers durch den X-Schlitten nötig ist, so daß die Spannrolle angehoben wird, wobei durch das intermittierende Ein-Aus-Signal an die Bremse eine zu reichliche Papierzufuhr von der Vorratsrolle (30) unterbunden und damit ein Anschlagen der Spannrolle (38) am Hubbegrenzer (44) mit nachfolgendem Maschinenstopp verhinderbar ist.

3. Maschine nach Anspruch 1, dadurch **gekennzeichnet**, daß das Ein-Aus-Signal vom Controller (56) durch die Spannrolle (38) bei ihrem Anschlag am Hubbegrenzer (42) ausgelöst wird, wodurch die Papierzufuhr infolge fehlendem Ein-Aus-Signal zur Vorratsrolle (30) abgeschaltet ist, und daß die Spannrolle (40) im Aufwikkelbereich (18) über das zugeführte Papier bis zum Anschlag am Hubbegrenzer (46) abgesenkt wird, wodurch über ein Ansteuersignal des Controllers (56) die Untersetzermotor-Anordnung (52) zum Aufwickeln des abgezogenen Papiers auf die Aufwickelrolle (36) in Gang gesetzt wird, bis die Spannrolle (40) bei ihrer Aufwärtsbewegung an einem weiteren Hubbegrenzer (48) anschlägt.

4. Maschine nach Anspruch 1, dadurch **gekennzeichnet**, daß die Klemmvorrichtungen (26, 28) eine ortsfeste Klaue (32) und eine mit einem elektromagnetisch betätigbaren Hebel (36) verbundene bewegliche Klaue (34) aufweisen, daß der Elektromagnet (37) über den Controller (56) automatisch oder manuell über ein Bedienpult (60) angesteuert wird zwecks Einzugs des Papiers (15) zwischen die beiden Klemmen durch Relativbewegung zwischen Papier und Klemmvorrichtungen, solange der Elektromagnet über eine Feder (37) in seiner geöffneten Stellung gehalten ist.

5. Maschine nach Anspruch 1 und 4, dadurch **gekennzeichnet**, daß ein ungewollter Papiertransport während eines Zeichenvorganges durch am Papier angreifende, am Zeichentisch (21) angeordnete Andrückschienen (106, 108) vermieden ist, die über Elektromagneten (110, 112) während des Transports des Papiers (15) bei geöffneter Klemmvorrichtung angehoben werden.

Fig. 1

Fig.2

Fig.3

Fig.4

Fig. 5

Fig. 6

Fig.7

Fig. 8

Fig. 9

Fig. 10

Fig.11

Fig.12